# EUROPEAN PATENT SPECIFICATION

(11) **EP 2 028 023 B1**
(45) Date of publication and mention of the grant of the patent: **25.05.2011**
(21) Application number: 08252750.8
(22) Date of filing: 19.08.2008
(51) Int. Cl.: B60C 11/00

(54) **Pneumatic tire, shoe, tire chain, and pneumatic tire vulcanization-mold**
Luftreifen, Schuh, Gleitschutzkette und Luftreifen-Vulkanisierungsform
Pneu, chaussure, chaîne antidérapante et moule de vulcanisation de pneu

(30) Priority: 22.08.2007 JP 2007215823; 08.07.2008 JP 2008177823
(43) Date of publication of application: 25.02.2009
(73) Proprietor: Bridgestone Corporation, Tokyo 104-8340 (JP)
(72) Inventor: Kayashima, Kentaro, Tokyo 104-8340 (JP)
(74) Representative: Whalley, Kevin

(56) References cited:
- GB-A- 1 462 683
- JP-A- 7 257 111
- US-A- 3 084 732
- US-A- 5 836 091

## Description

### BACKGROUND

### Technical Field

The present invention relates to a pneumatic tire suitable for winter use, shoes, tire chain, and pneumatic tire vulcanization-mold. In particular, the present invention relates to a pneumatic tire with improved braking performance on initial use, shoes, tire chain, and pneumatic tire vulcanization-mold.

### Related Art

There are "studless tires" with improved performance on snowy/icy and wet roads. There are various types of studless tires, such as those compounded with various fillers so as to obtain an edge effect on an icy surface, and those that use a foamed rubber to absorb water and obtain an edge effect during the period of use of the foamed layer.

However, generally the above described fillers and foam layers are not exposed at the tire surface that is in direct contact with the mold when rubber is vulcanized, this tending to lead to a skin being formed on the tire surface. As a result of this the effect from the fillers and foam layers is not exhibited on initial use (or if any effect is exhibited it is small).

To address this issue, for example, Japanese Patent Application Laid-Open (JP-A) Nos. 2004-34902 and 2004-34903 describe pneumatic tires for icy/snowy road use with improved braking performance during initial abrasion, achieved by forming fine grooves in the tread surface. There is also a pneumatic tire described in JP-A No. 7-186633 with shallow grooves formed on the contact lands of the tread and making an angle of between 0 ° and 40 ° to the tire circumferential direction, these shallow grooves being disposed along the tire width direction.

JP 07-257111 discloses a known pneumatic tire.

However, in practice even higher braking performance on initial use is desired from pneumatic tires.

### SUMMARY

In consideration of the above circumstances, an object of the present invention is to provide a pneumatic tire that obtains high braking performance on initial use, and to provide shoes, tire chain; and pneumatic tire vulcanization-mold.

The inventor has discovered that when protrusions and indentations of less than 1mm are formed to the surface of the tread surface of an unused tire (a tire that has not been run) then there is superior pulling capacity and braking performance during initial running on ice. Furthermore, the inventor has discovered a previously unknown technique to maintain gaps formed by the protrusions and indentations at the loaded ground contact surface.

When a shearing force is received from the loaded ground contact surface at a tread portion to which protrusions and indentations have been provided, if these protrusions and indentations are formed with deep indented portions, the gaps of the indentation portions disappear due to the rigidity of the protruding portions being reduced, and any effect of the surface roughening on pulling capacity and braking performance becomes weaker.

The inventor has carried out extensive investigations and testing of structures such that the gaps formed by indented portions formed on the outside surface of the tread are deep, and yet do not disappear when a shear force is received from the loaded ground contact surface, thereby completing the invention.

A first aspect of the invention is a pneumatic tire including a tread portion, wherein a tread land portion surface has an Rsk value of zero or greater.

Rsk indicates the skewness of the roughness profile.

The first aspect of the invention has an Rsk of the tread land portion surface that is zero or greater. Consequently, a construction is thereby achieved in which gaps formed between the tread surface and the ground contact surface do not disappear when the tire contacts the ground. Therefore high braking performance and high pulling capacity can be secured even when the tire is initially used.

The Rsk of the tread land portion surface is preferably 1.0 or less. By so doing the Rsk is not made excessively large, so the construction of the tread land portion surface is simplified and a reduction in cost can be achieved.
The Rsk of the tread land portion surface is more preferably within the range of 0.1 to 1.0. The construction of the tread land portion surface is further simplified thereby and a further reduction in cost can be achieved.
The Rsk of the tread land portion surface is even more preferably within the range of 0.2 to 1.0. The construction of the tread land portion surface is simplified even further thereby and an even greater reduction in cost can be achieved.

According to the invention the tread land portion surface has an Rsk value of zero or greater due to shallow grooves being formed in the tread portion.

A construction is thereby achieved in which gaps formed on the outside of the tread surface do not disappear even when the depth of the shallow grooves is deep, and the tread land portion surface can be readily provided with an Rsk of zero or greater.

According to the invention the average width of the shallow grooves is within the range of from 10 to 100 µm.

If the average width of the shallow grooves is less than 10 µm then it is difficult to secure the necessary gaps, whereas if the average width is greater than 100 µm then there is a large reduction in the surface area in contact with the road surface.

A second aspect of the invention is a shoe including a rubber sole having an Rsk of zero or greater by shallow grooves being formed on the ground contact surface of the rubber sole, wherein the average width of the shallow grooves is within the range of from 10 to 100 µm.

A shoe with improved anti-slip performance on ice is thereby provided, by using similar principles to those used in improving the braking performance and traction of the tire on ice.

A third aspect of the invention is a tire chain including a rubber tire chain having a tire chain outer surface with an Rsk of zero or greater by shallow grooves being formed on the outer surface of the tire chain, wherein the average width of the shallow grooves is within the range of from 10 to 100 µm.

A tire chain with improved braking performance and traction on ice is thereby provided, by using similar principles to those used in improving the braking performance and traction of the tire on ice.

A fourth aspect of the invention is a vulcanization-mold for pneumatic tires, wherein the mold surface contacting the tread land portion surface has an Rsk of zero or less, so as to vulcanization-mold pneumatic tires having an Rsk of the tread land portion surface of the pneumatic tire of zero or greater.

In the fourth aspect of the invention the mold surface contacting the tread land portion surface has an Rsk of zero or greater due to shallow grooves having an average width within the range from 10 to 100 µm being formed in the tread portion. Consequently pneumatic tires of the first aspect can readily be obtained.

A fifth aspect of the invention is the vulcanization-mold for pneumatic tires in which the mold surface is provided with an Rsk of zero or less by etching or by sandblasting.

It is thereby possible to consistently vulcanization-mold tires with an Rsk of the tread land portion surface of zero or greater.

### BRIEF DESCRIPTION OF THE DRAWINGS

Exemplary embodiments of the present invention will be described in detail based on the following figures, wherein:
FIG. 1 is a cross-section taken in the radial direction of a pneumatic tire according to a first exemplary embodiment;
FIG. 2 is an explanatory diagram showing blocks disposed in a plane on a tread portion of a pneumatic tire according to the first exemplary embodiment;
FIG. 3A is an expanded cross-section of a side face portion of a land surface of a tread portion of a pneumatic tire according to the first exemplary embodiment, shown in a non contact state, and FIG. 3B is an expanded cross-section of a side face portion of a land surface of a tread portion of a pneumatic tire according to the first exemplary embodiment, shown in a state of contact;
FIG. 4 is an expanded cross-section of a side face portion of a mold surface of a vulcanization-mold when manufacturing a pneumatic tire according to the first exemplary embodiment;
FIG. 5 is a perspective view of the under sole of a shoe according to a second exemplary embodiment; and
FIG. 6 is a perspective view showing a tire chain according to a third exemplary embodiment, in a mounted state to a pneumatic tire.

### DETAILED DESCRIPTION

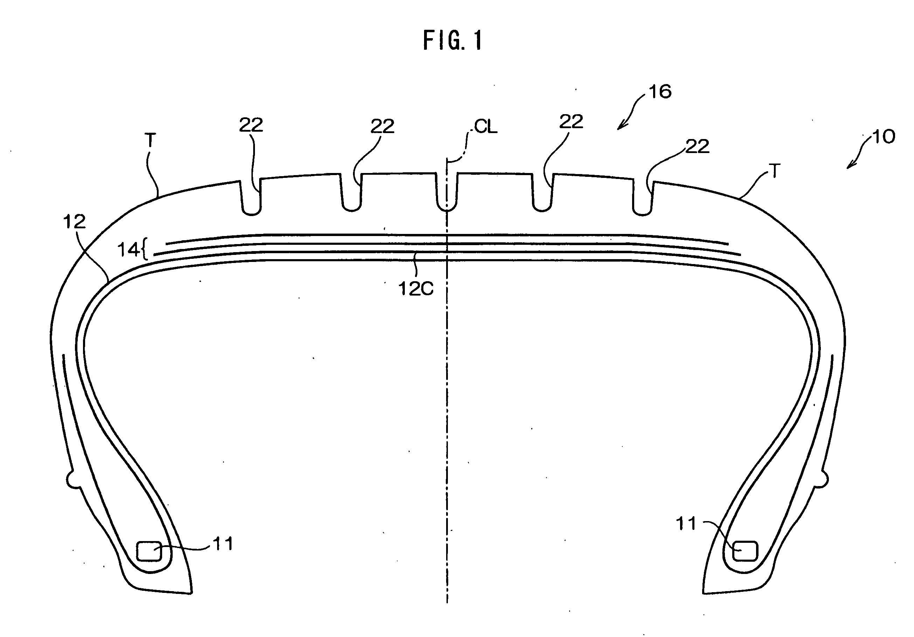

Explanation will now be given of exemplary embodiments of the present invention. First Exemplary Embodiment Explanation will now be given of the first exemplary embodiment. A pneumatic tire 10 according to the present exemplary embodiment is, as shown in FIG. 1, is a studless tire provided with a bead core 11 at each edge thereof, together with a carcass 12 configured from a single layer, or from plural layers, wrapped around the bead cores 11.

There is a belt layer 14 buried within the tire at the tire radial direction outside of a crown portion 12C of the carcass 12, the belt layer 14 being configured with plural overlapping sheets (for example two sheets) of belt ply.

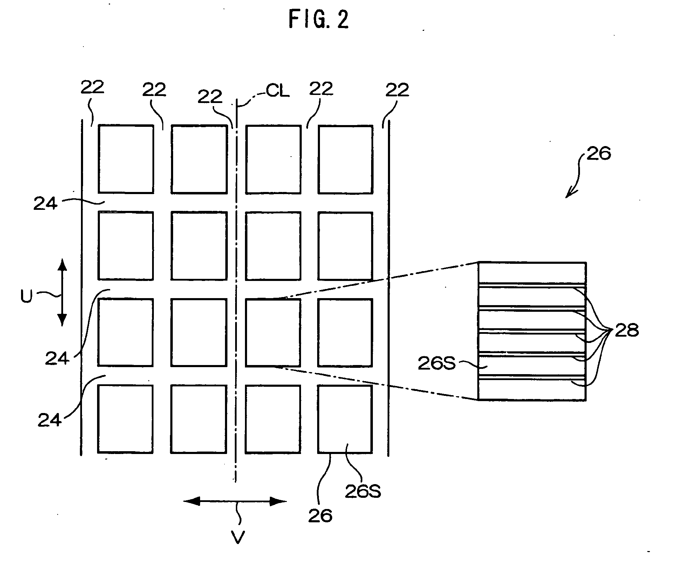

There is a tread portion 16 formed at the radial direction of the tire outside of the belt layer 14, and grooves are disposed in the tread portion 16. The tread portion 16, as shown in FIG. 2, has plural circumferential direction grooves (main grooves) 22 formed so as to run along the tire circumferential direction U on the plane of the tire equator CL, and on both sides thereof. There are also plural cross grooves 24 formed in the tread portion 16 orthogonally to the tire circumferential direction U. In the present exemplary embodiment the cross grooves 24 are formed to run along the tire width direction V. Portions at each of the two ends of the cross grooves 24 are either connected to circumferential direction grooves 22 or the ends thereof extend past the edges of the tread T at the outside in the tire width direction, so as to be able to release water therefrom.

The reference here to the edges of the tread T refers to outside edges of the road contact portion of the tire in the width direction when a pneumatic tire is mounted to a standard rim, as defined in the JATMA YEAR BOOK (2006 edition, Japan Automobile Tire Manufacturers Association standards), inflated to a pressure (maximum pressure) of 100% of the maximum load (load shown in bold in the internal pressure-loading force correspondence table) for the applicable JATMA YEAR BOOK size/ply rating, and with the maximum load applied thereto. It should be noted that where the location of use or manufacturing location use TRA standards or ETRTO standards, then these respective standards are applied.

The pneumatic tire 10 is a tire used as a studless tire for winter use. The tread rubber for forming the tread portion 16 has a hardness of 50 (at 0 °C, JIS-A), with a loss modulus tan δ (peak value) at - 45 °C, and a dynamic elastic modulus of 180 kgf/cm² (at -20 °C, 0.1 % strain). However, the present invention is not limited thereto.

The tread rubber used in the studless tire for winter use preferably has a hardness of 40 to 68 (at 0 °C, JIS-A), with a loss modulus tan δ (peak value) at - 30 °C or lower, and a dynamic elastic modulus of 300 kgf/cm² or lower (at -20 °C, 0.1 % strain).

With respect to the above, a hardness of tread rubber of less than 40 is too soft and the tire abrasion resistance is inferior, and a hardness of greater than 68 is too hard and the contact surface area with an icy road is decreased, with inferior braking performance and traction, hence such harnesses are not preferable. A loss modulus tan δ (peak value) higher than - 30 °C is not preferable as the tire is too rigid on an icy/snowy road and the contact surface area with an icy road is decreased, with inferior braking performance and traction therefrom. In addition a dynamic elastic modulus of higher than 300 kgf/cm² is not preferable as the tire is too rigid on an icy road and the contact surface area with an icy road is decreased, with inferior braking performance and traction therefrom.

There are a large number of blocks 26 formed on the tread portion 16 by the circumferential direction grooves 22 and the cross grooves 24, as shown in FIG. 2.

Each of the blocks 26 is, for example, formed with sipes 28 running along the direction of the cross grooves 24. The sipes 28 are, for example, "open sipes", with both ends thereof opening into and communicating with the circumferential direction grooves 22 at the walls at both sides of the block.

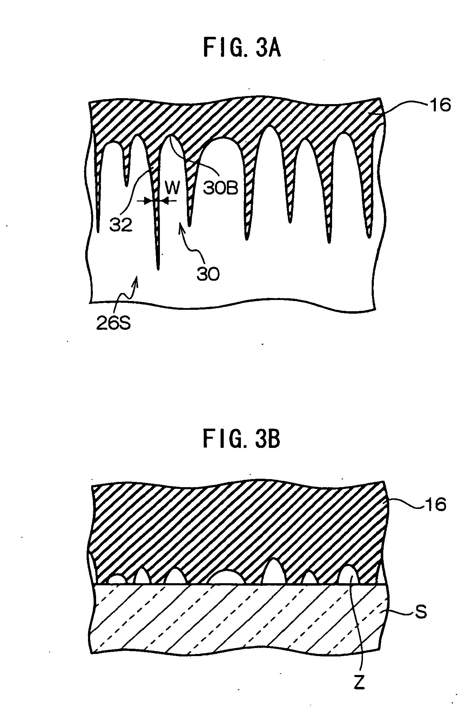

The land portion surfaces (surfaces of the blocks 26) 26S have an Rsk of zero or greater, as shown in FIG. 3A. This Rsk is an ISO standard parameter (JIS B0601, the disclosure of which is incorporated by reference herein) representing the skewness of the roughness profile.

In the present exemplary embodiment, there are shallow grooves (riblets) 30 formed in the tread portion 16 such that the Rsk of the land portion surfaces 26S is zero or greater. These shallow grooves 30 are of a long thin shape, with rounded groove bottoms 30B as seen in a width direction cross-section of the shallow grooves. The leading ends (ends on the outside in the radial direction of the tire) of the groove walls 32 configured from tread rubber are pointed. The width W at the central portion in the height direction of the groove walls 32 is within the range of from 10 to 100 µm. The average width of the shallow grooves 30 is within the range of 10 to 100 µm.

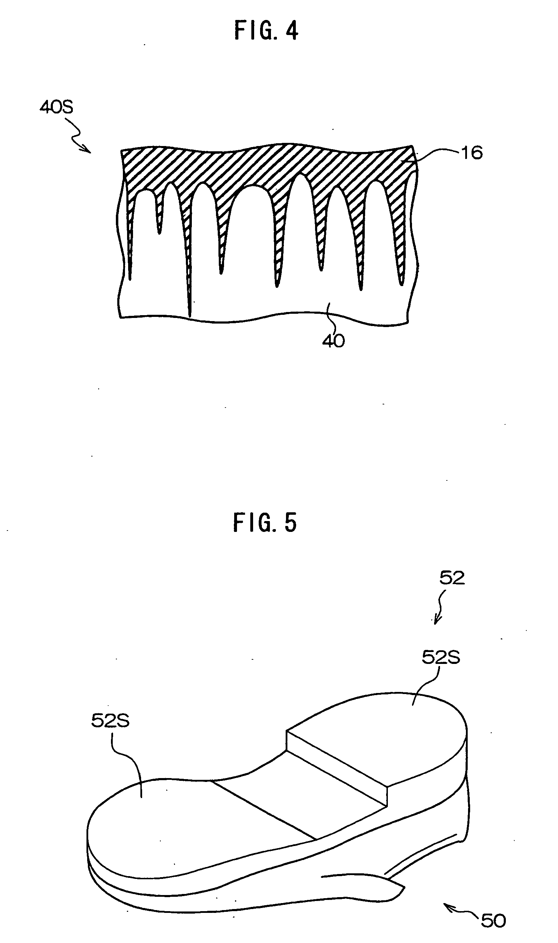

A vulcanization-mold 40, like the one shown in FIG. 4, is used for manufacture of the pneumatic tire 10. The vulcanization-mold 40 has a mold surface 40S that contacts the land portion surfaces 26S of the tread portion 16, and the mold surface 40S has an Rsk of zero or less.

Etching or sandblasting is performed as surface processing in order to provide the mold surface 40S with an Rsk of zero or less.

In etching, for example, a resist liquid can be coated on 50% or more of the mold surface that contacts the land portion surface, and then etching carried out to give a mold surface with an Rsk of zero or less.

In sandblasting, for example, 50% or more of the mold surface that contacts the land portion surface can be masked, and then sandblasting carried out to give a mold surface with an Rsk of zero or less.

When the pneumatic tire 10 is mounted on a vehicle wheel and run on an icy road, as shown in FIG. 3B, the groove walls 32 are compressed by the contacting surface of the icy road surface S. The shear rigidity is increased in the groove walls 32 of the land portion surfaces 26S of Rsk zero or greater. Consequently, the structure is such that when a shearing force is received by the groove walls 32 from the load applied contact surface (icy road surface S), even though the depth of the shallow grooves 30 is deep, the gaps Z formed on the outside of the tread surface do not disappear with the load application. Therefore a surface state like that of a tread surface of foamed rubber may be formed, and a high degree of braking performance and pulling capacity can be secured on an icy road, even when the tire is initially used.

The land portion surfaces 26S have an Rsk of zero or greater by forming the shallow grooves 30 in the manner described above. Consequently, the land portion surfaces 26S of the tread portion 16 are readily formed with an Rsk of zero or greater.

The land portion surfaces 26S of the tread portion 16 are provided with an Rsk of zero or less by the mold surface 40S of the vulcanization-mold 40, which contacts the land portion surfaces 26S of the tread portion 16, having an Rsk of zero or greater. Manufacture of the pneumatic tire 10 is thereby readily carried out.

It should be noted that the roughness average (center line average roughness) Ra of the land portion surfaces 26S is preferably within the range of from 10 to 100 µm. When the Ra is within such a range the coefficient of friction on ice does not readily decrease. An Ra value within the range of 10 to 50 µm is even more preferable since a preferable coefficient of friction on ice is secured.

Second Exemplary Embodiment Explanation will now be given of a second exemplary embodiment. A shoe 50 according to the present exemplary embodiment is made from rubber, as shown in FIG. 5. There are shallow grooves 30 (see FIG. 3) formed on the ground contact surface of a sole 52 of the shoe 50, the shallow grooves 30 being similar to those explained in the first exemplary embodiment. The contact surface 52S has an Rsk of zero or greater due to the formation of these shallow grooves. The average value of these shallow grooves is within the range of 10 to 100 µm, as in the first exemplary embodiment.

According to the present exemplary embodiment, the shoe 50 with improved anti-slip performance on ice is provided, by using similar principles to those used in improving the braking performance and traction of the tire on ice.

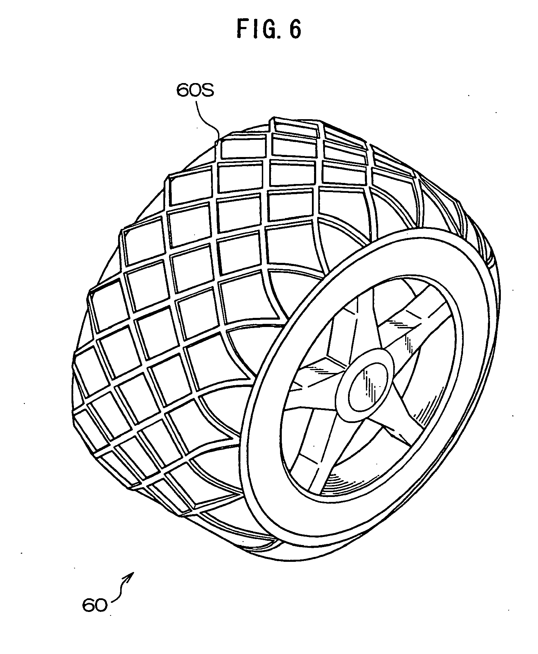

Third Exemplary Embodiment Explanation will now be given of a third exemplary embodiment. As shown in FIG. 6, a tire chain 60 according to the present exemplary embodiment is made from rubber, and there are shallow grooves 30 (see FIG. 3) formed on the outer surface of the tire chain 60, the shallow grooves 30 being similar to the shallow grooves 30 explained in the first exemplary embodiment. The outer surface of the tire chain 60S has an Rsk of zero or greater due to the formation of these shallow grooves. The average width of these shallow grooves is within the range of 10 to 100 µm, as is the case in the first exemplary embodiment.

According to the present exemplary embodiment, the tire chain 60 with improved braking performance and traction on ice is provided, by using similar principles to those used in improving the braking performance and traction of the tire on ice.

Test Examples
In order to confirm the effect of the present invention, the present inventors prepared five examples (referred to below as Examples 1 to 5) of the pneumatic tire 10 according to the first exemplary embodiment, having an Rsk within the given range (zero or greater) on a pneumatic tire with no formed tread pattern. Three examples of pneumatic tires for comparison (referred to below as Comparative Examples 1 to 3) were also prepared. The present inventors have then carried out braking performance evaluation in performance tests on each of the tires. It should be noted that the above tires with no formed pattern are tires with no indentations or protrusions of 1 mm or greater formed on the tread portions thereof.

All of the tire in the Test Examples are 205/65R15 size. Except for the Rsk value, all of the other parameters of the tires, such as the groove width, block size, sipe size etc., are all the same.

The Rsk values for each of the tires in the Test Examples are shown in Table 1.

**Table 1**

| | Example 1 | Example 2 | Example 3 | Example 4 | Example 5 | Comparative Example 1 | Comparative Example 2 | Comparative Example 3 |
|---|---|---|---|---|---|---|---|---|
| Ra | 35 | 27 | 13.8 | 11.9 | 14.6 | 49.8 | 70.6 | 33 |
| Rsk | 0.952 | 0.071 | 0.221 | 0.274 | 0.536 | -0.738 | -0.940 | -0.478 |
| Index | 104 | 100 | 105 | 116 | 106 | 94 | 94 | 99 |

All of the tires in the Test Examples were inflated to the standard internal pressure after fitting to standard rims and mounting as the four wheels on a four wheel drive vehicle. The braking distance was then measured with a standard load, at a speed of 20 km/h on an icy road at - 2 °C with the four wheels in a locked state (with all of the 4 tires in a locked state due to braking). An relative evaluation index was then computed, with the braking distance of Example 2 set as at 100.

The term "standard rim" above indicates, for example, to the reference rim of the applicable size as defined in the JATMA 2006 YEAR BOOK, the term "standard load" and "standard internal pressure" in the same manner indicate the maximum load and the internal pressure for the maximum load for the applicable size and ply rating as defined in the JATMA 2006 YEAR BOOK. Where the tire location of use or manufacturing location use TRA standards or ETRTO standards, then these respective standards are applied.

The results of the evaluations (computed index for each of the tires) are shown in Table 1. In Table 1, the higher the value of the index the higher the braking performance, i.e. the shorter the braking distance. As can be seen from Table 1, the Examples 1 to 5 all have higher braking performance in comparison to those of the Comparative Examples 1 to 3.

The foregoing description of the exemplary embodiments of the present invention has been provided for the purposes of illustration and description. Many modifications and variations can be made without departing from the scope of the invention as defined in the claims. Obviously the present invention is not limited to the exemplary embodiments described.

## Claims

1. A pneumatic tire (10) comprising:
a tread portion (16), wherein a tread land portion surface (26S) has a roughness profile skewness (Rsk) value of zero or greater,
wherein the tread land portion surface has an Rsk value of zero or greater due to shallow grooves (30) being formed in the tread portion, and **characterised in that** the average width of the shallow grooves is within the range of from 10 to 100 µm.

2. A shoe (50) comprising:
a rubber sole (52) having an Rsk of zero or greater due to shallow grooves (30) being formed on the ground contact surface (52S) of the rubber sole, wherein the average width of the shallow grooves is within the range of from 10 to 100 µm.

3. A tire chain (60) comprising a rubber tire chain having a tire chain outer surface (60S) with an Rsk of zero or greater due to shallow grooves (30) being formed on the outer surface of the tire chain, wherein the average width of the shallow grooves is within the range of from 10 to 100 µm.

4. A vulcanization-mold for pneumatic tires (10), wherein the mold surface (40S) contacting the tread land portion surface (26S) has an Rsk of zero or less, so as to vulcanization-mold pneumatic tires having an Rsk of the tread land portion surface of the pneumatic tire of zero or greater, due to shallow grooves (30) being formed in the tread portion, wherein the average width of the shallow grooves so formed is within the range of from 10 to 100 µm.

5. The vulcanization-mold for pneumatic tires of claim 4, wherein the mold surface is provided with an Rsk of zero or less by etching or by sandblasting.

## Patentansprüche

1. Ein Luftreifen (10) umfassend:
einen Laufflächenabschnitt (16), wobei eine Laufflächenlandabschnittoberfläche (26S) einen Rauigkeitsprofilschiefe-(Rsk)-Wert von Null oder mehr aufweist, wobei die Laufflächenlandabschnittoberfläche einen Rsk-Wert von Null oder mehr aufgrund flacher Nuten (30) aufweist, die in dem Laufflächenabschnitt gebildet sind, und **dadurch gekennzeichnet, dass** die durchschnittliche Breite der flachen Nuten in einem Bereich von 10 bis 100 µm liegt.

2. Ein Schuh (50) umfassend:
eine Gummisohle (52) mit einem Rsk von Null oder mehr aufgrund flacher Nuten (30), die auf der Bodenkontaktfläche (52S) der Gummisohle gebildet sind, wobei die durchschnittliche Breite der flachen Nuten in dem Bereich von 10 bis 100 µm liegt.

3. Eine Gleitschutzkette (60) mit einer Gummigleitschutzkette mit einer Gleitschutzkettenaußenseite (60S) mit einem Rsk von Null oder mehr aufgrund flacher Nuten (30), die auf der Außenseite der Gleitschutzkette gebildet sind, wobei die durchschnittliche Breite der flachen Nuten in dem Bereich von 10 bis 100 µm liegt.

4. Eine Vulkanisierungsform für Luftreifen (10), wobei die Formoberfläche (40S), die die Laufflächenlandabschnittoberfläche (26S) kontaktiert, einen Rsk von Null oder weniger aufweist, so dass die vulkanisierungsgeformten Luftreifen einen Rsk der Laufflächenlandabschnittoberfläche des Luftreifens von Null oder mehr aufweisen aufgrund flacher Nuten (30), die in dem Laufflächenabschnitt gebildet sind, wobei die durchschnittliche Breite der so gebildeten schmalen Nuten innerhalb des Bereichs von 10 bis 100 µm liegt.

5. Vulkanisierungsform für Luftreifen nach Anspruch 4, in welcher die Formoberfläche mit einem Rsk von Null oder weniger durch Ätzen oder Sandstrahlen versehen ist.

## Revendications

1. Bandage pneumatique (10) comprenant :
une partie (16) de bande de roulement, dans laquelle une surface (26S) d'une partie de méplat de la bande de roulement a une valeur d'asymétrie du profil (Rsk) égale à zéro ou plus,
où la surface de la partie en méplat de la bande de roulement a une valeur Rsk égale à zéro ou plus du fait de rainures peu profondes (30) qui sont formées dans la partie de la bande de roulement, et **caractérisé en ce que** la largeur moyenne des rainures peu profondes se trouve dans la plage de 10 à 100 µm.

2. Chaussure (50) comprenant :
une semelle en caoutchouc (52) ayant une valeur de Rsk égale à zéro ou plus du fait de rainures peu profondes (30) qui sont formées sur la surface (52S) de contact avec le sol de la semelle en caoutchouc, où la largeur moyenne des rainures peu profondes se trouve dans la plage de 10 à 100 µm.

3. Chaîne (60) pour pneu comprenant une chaîne pour pneu en caoutchouc ayant une surface externe (60S) de la chaîne pour pneu dont la valeur de Rsk est égale à zéro ou plus du fait de rainures peu profondes (30) qui sont formées sur la surface externe de la chaîne pour pneu, où la largeur moyenne des rainures peu profondes se trouve dans la plage de 10 à 100 µm.

4. Moule de vulcanisation pour bandages pneumatiques (10), dans lequel la surface (40S) du moule venant au contact de la surface (26S) de la partie de bande de roulement a une valeur de Rsk égale à zéro ou moins, de manière à exécuter un moulage par vulcanisation des bandages pneumatiques dont la valeur de Rsk de la surface de la partie de bande de roulement du bandage pneumatique est égale à zéro ou plus, du fait de rainures peu profondes (30) qui sont formées dans la partie de bande de roulement, où la largeur moyenne des rainures peu profondes ainsi formées se trouve dans la plage de 10 à 100 µm.

5. Moule de vulcanisation pour bandages pneumatiques de la revendication 4, dans lequel la surface du moule présente une valeur de Rsk égale à zéro ou moins par gravure ou par sablage.
